# EUROPEAN PATENT APPLICATION

(11) **EP 4 379 747 A1**
(43) Date of publication of application: **05.06.2024**
(21) Application number: 22848673.4
(22) Date of filing: 29.07.2022
(51) Int. Cl.: H01B 7/02, B60R 16/02

(54) **INTEGRATED HARNESS ASSEMBLY AND MANUFACTURING METHOD THEREFOR, AUTOMOBILE, AND VEHICLE**

(30) Priority: 30.07.2021 CN 202121770844 U
(71) Applicant: Jilin Zhong Ying High Technology Co., Ltd., Jilin 130000 (CN)
(72) Inventor: WANG, Chao, Changchun, Jilin 130000 (CN)
(74) Representative: Boult Wade Tennant LLP
(86) International application number: PCT/CN2022/108983
(87) International publication number: WO 2023/006069

(57) **Abstract**

An integrated harness assembly and a manufacturing method therefor, an automobile, and a vehicle. The integrated harness assembly includes a substrate (10) and a conductive wire (20), and the conductive wire includes an insulating layer (22) and at least one conductive core (21), and the insulating layer (22) wraps the conductive core and is connected to the substrate (10). The provided integrated harness assembly simplifies the manual operation procedure, save the man-hours and improve the harness mounting efficiency.

## Description

### RELATED APPLICATION

The present disclosure claims priority to Chinese Utility Model Patent Application NO. 202121770844.6 filed on July 30, 2021, which is hereby incorporated by reference in its entirety.

### TECHNICAL FIELD

The present disclosure relates to the technical field of electronic connections, and particularly to an integrated harness assembly and a manufacturing method therefor, an automobile, and a vehicle.

### BACKGROUND

Many parts in an automobile need to be mounted with harnesses for the use of various electrical components, such as body roof, a bumper or a door. When the door is taken as an example, generally the door includes an outer door panel, an inner door panel and a decorative panel, in which an outer side of the inner door panel is connected to the outer door panel, and an inner side of the inner door panel is connected to the decorative panel. With the increase of the functions of electrical units in the automobile, the internal functions of the door are also increasing, concerning a glass lifter, a central lock, an automotive speaker, a controller assembly, an airbag, etc. It is necessary to provide harnesses inside the door to realize the electrical connections of the above electrical units, thereby enabling the normal operations thereof.

There are many electrical units inside the door, and the harness structure is complex. During assembling the door, or when the door is damaged by collision and needs to be repaired by a serviceman, a harness needs to be manually fixed on the inner door panel, and the harness should repeatedly pass through a hole in the inner door panel to be connected to the electrical units on both sides of the inner door panel, so the mounting efficiency is low. Similarly, when a harness is mounted on any other part or the part is damaged and needs to be repaired by a serviceman, the harness needs to be manually mounted into the part, and in case of a plurality of harnesses, they should be fixed one by one, so the harness mounting efficiency is also low.

### SUMMARY

The present disclosure provides an integrated harness assembly and a manufacturing method therefor, an automobile, and a vehicle, so as to solve the technical problem of the low mounting efficiency of a harness in the prior art.

Embodiments of a first aspect of the present disclosure provide an integrated harness assembly, including: a substrate and a conductive wire, and the conductive wire includes an insulating layer and at least one conductive core, and the insulating layer wraps the conductive core and is connected to the substrate.

Embodiments of a second aspect of the present disclosure provide an automobile, including a door, a body roof, a bumper and the integrated harness assembly according to the embodiments of the first aspect; at least one of the door, the body roof and the bumper is provided with the integrated harness assembly.

Embodiments of a third aspect of the present disclosure provide a vehicle, including the integrated harness assembly according to the embodiments of the first aspect.

Embodiments of a fourth aspect of the present disclosure provide a method for manufacturing the integrated harness assembly according to the embodiments of the first aspect, including: forming a substrate; disposing a conductive core on the substrate; and putting the substrate with the conductive core into a mold and forming an insulating layer outside the conductive wire by injection molding.

Compared with the prior art, the present disclosure has at least the following advantageous effects:
1. Being wholly provided, the integrated wire harness assembly according to the present disclosure is a complete assembly unit. When a harness is required to be mounted in an automobile part (e.g., a body roof, a bumper, a door, or the like), it is only necessary to mount the integrated harness assembly according to the present disclosure on the automobile part and connect the substrate to the automobile part. When the automobile part is damaged and needs to be repaired, it is only necessary to directly replace the integrated harness assembly as a whole. The integrated harness assembly according to the present disclosure can be produced independently, and the conductive wire may be arranged on the substrate as required and complete the connection therebetween, thereby realizing mass production. When the integrated harness assembly according to the present disclosure is assembled to the automobile part, it is possible to avoid manual fixing of a harness for electrical connection, thereby simplifying the manual operation procedure, saving the man-hours and improving the harness mounting efficiency. When the automobile part is damaged and needs to be repaired, it is unnecessary to manually detach and assemble the harness, which improves the efficiency of maintenance and mounting, saves the man-hours and reduces the cost of maintenance and mounting.
2. The integrated harness assembly according to the present disclosure can realize singlechannel electrical connection and multi-channel electrical connection.
3. In the integrated harness assembly according to the present disclosure, the shielding layer is disposed outside the insulating layer, which may improve the anti-interference capability of the integrated harness assembly and make the electrical connection more stable and reliable.
4. In the integrated harness assembly according to the present disclosure, the insulating layer of the conductive wire is fixedly connected to the substrate while being injection-molded, which is beneficial to realizing mass, automatic and intelligent production of the integrated harness assembly. The insulating layer in the integrated harness assembly is injection-molded on the substrate and fixedly connected thereto, so that the conductive wire is closely attached to the substrate and the conductive wire is firm and stable, which avoids a friction damage of the conductive wire and prevent abnormal sound caused by the looseness of the conductive wire during travelling of the automobile, thereby avoiding the arrangement of a sound insulation structure and further reducing the cost.
5. In the integrated harness assembly according to the present disclosure, the fixing member and the insulating layer are integrally formed by injection molding, so that they are connected while being formed and the efficiency is high. In addition, by forming the fixing member during the formation of the insulating layer, it is possible to avoid any other component from being disposed on the substrate, prevent the structure of the substrate from being increased, and facilitate processing and manufacturing.
6. In the integrated harness assembly according to the present disclosure, the substrate is provided with a connecting hole, so that the fixing member is disposed flexibly, and the position of the fixing member may be set depending on the mounting space of the substrate; moreover, injection molding slurry directly passes through the substrate via the connecting hole, so that a long-distance flow is avoided, which on the one hand saves the raw material, and on the other hand improves the injection molding efficiency.

It should be understood that both the foregoing general description and the following detailed description are for the purposes of illustration and description and are not necessarily restrictive of the present disclosure. The accompanying drawings, which are incorporated in and constitute a part of the specification, illustrate the subject matter of the present disclosure. Meanwhile, the specification and the drawings are used to illustrate the principle of the present disclosure.

### BRIEF DESCRIPTION OF THE DRAWING(S)

In order to more clearly illustrate the technical solutions in the embodiments of the present disclosure or the prior art, the drawings to be used in the description of the embodiments or the prior art will be briefly introduced below. Obviously, the drawings introduced below only illustrate some embodiments of the present disclosure, and other drawings may be obtained by those of ordinary skill in the art from these drawings without paying any creative labor.
FIG. 1 illustrates a schematic structural diagram of an integrated harness assembly according to an embodiment of the present disclosure;
FIG. 2 illustrates a cross-sectional view taken at A-A of a structure of the integrated harness assembly illustrated in FIG. 1;
FIG. 3 illustrates a cross-sectional view taken at A-A of another structure of the integrated harness assembly illustrated in FIG. 1;
FIG. 4 illustrates a cross-sectional view of a loop connection spot according to an embodiment of the present disclosure;
FIG. 5 illustrates a cross-sectional view taken at B-B of the integrated harness assembly illustrated in FIG. 1;
FIG. 6 illustrates a cross-sectional view of terminal plugging according to an embodiment of the present disclosure;
FIG. 7 illustrates a cross-sectional view taken at C-C of the integrated harness assembly illustrated in FIG. 1;
FIG. 8 illustrates a cross-sectional view of plugged connections between different substrates according to an embodiment of the present disclosure; and
FIG. 9 illustrates a schematic structural diagram of another integrated harness assembly according to an embodiment of the present disclosure.

### DESCRIPTION OF EMBODIMENTS

The technical solutions of the present disclosure will be described below clearly and completely with reference to the drawings. Obviously, those described are only a part, rather than all, of the embodiments of the present disclosure.

Generally, the components in the embodiments of the present disclosure, which are described and illustrated in the drawings, may be arranged and designed in various different configurations. Therefore, the following detailed descriptions of the embodiments of the present disclosure illustrated in the drawings are not intended to limit the scope of the present disclosure, but merely represent selected embodiments of the present disclosure.

Based on the embodiments in the present disclosure, any other embodiment obtained by those of ordinary skill in the art without paying any creative labor should fall within the protection scope of the present disclosure.

'Electrical connection' in the embodiments of the present disclosure means that both electric energy and signals can be transmitted.

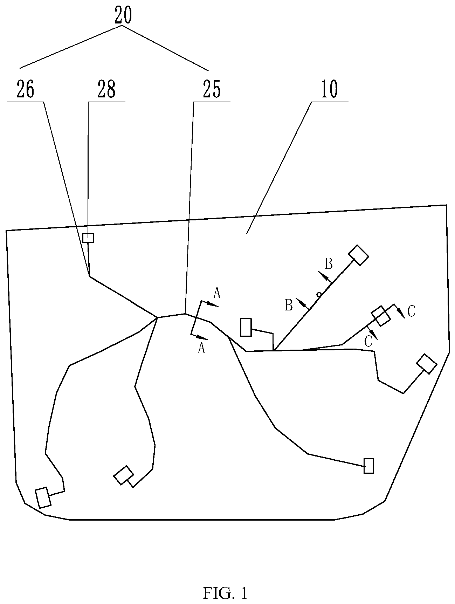

As illustrated in FIGS. 1 to 3, an embodiment of a first aspect of the present disclosure provides an integrated harness assembly, including a substrate 10 and a conductive wire 20, and the conductive wire 20 includes an insulating layer 22 and at least one conductive core 21, and the insulating layer 22 wraps the conductive core 21 and is connected to the substrate 10.

Being wholly provided, the integrated harness assembly according to the embodiment is a complete assembly unit. When a harness is required to be mounted in an automobile part (e.g., a body roof, a bumper, a door, or the like), it is only necessary to mount the integrated harness assembly according to the embodiment on the automobile part. When the automobile part is damaged and needs to be repaired, it is only necessary to directly replace the integrated harness assembly as a whole. The integrated harness assembly according to the embodiment can be produced independently, and the conductive wire 20 may be arranged on the substrate 10 as required and complete the connection therebetween, thereby realizing mass production. When the integrated harness assembly according to the embodiment is assembled to the automobile part, it is possible to avoid manual fixing of a harness for electrical connection, thereby simplifying the manual operation procedure, saving the man-hours and improving the harness mounting efficiency. When the automobile part is damaged and needs to be repaired, it is unnecessary to manually detach and assemble the harness, which improves the efficiency of maintenance and mounting, saves the man-hours and reduces the cost of maintenance and mounting.

It should be noted that depending on different requirements of different parts in the automobile for the number and the layout of the harnesses, integrated harness assemblies of different specifications may be produced in advance and then assembled to the corresponding parts.

In this embodiment, the substrate 10 may be made of metal or plastic, and the substrate 10 may also be in a hard or soft status, to meet different assembling requirements.

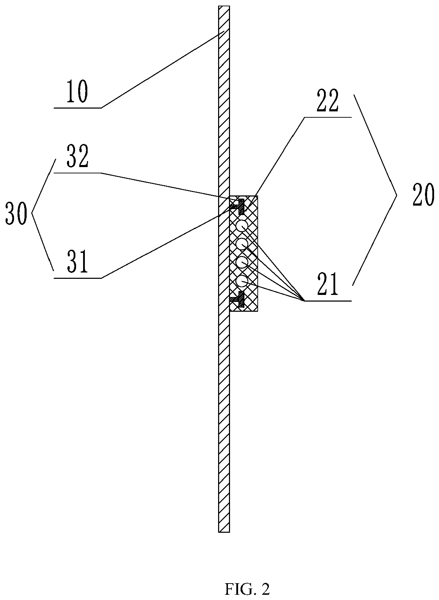

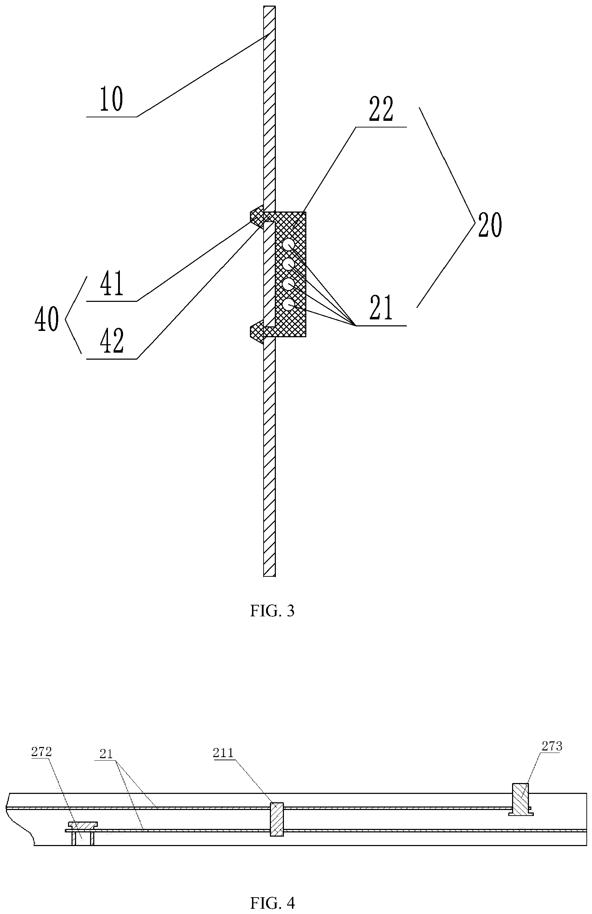

As illustrated in FIGS. 2 and 3, in some embodiments, the conductive wire 20 includes a plurality of conductive cores 21 which are insulated from each other and an insulating layer 22 which wraps the conductive cores 21. Since the signals transmitted by the automobile parts are complex and a simplex conductive core 21 cannot meet the data transmission, the conductive wire includes a plurality of conductive cores 21, and the plurality of conductive cores 21are divided and wrapped by an insulating layer 22 to achieve the purpose of insulation.

As illustrated in FIG. 4, in some embodiments, when there are a plurality of conductive wires 20 belonging to a same loop, a loop connection spot 211 is disposed in the insulating layer 22 to connect the conductive wires 20 in the same loop. When some power lines need to be shunted or some signal lines need to be tapped in the integrated harness assembly, one more conductive wire should be separately arranged, so that the manufacturing is complex and the material is wasted. It is possible to add one new conductive wire 20 to the existing conductive wires 20, and the loop connection spot 211 is configured to electrical connection, thereby avoiding repeated wiring, decreasing the layout of the conductive wires 20, reducing the use amount of materials and avoiding waste.

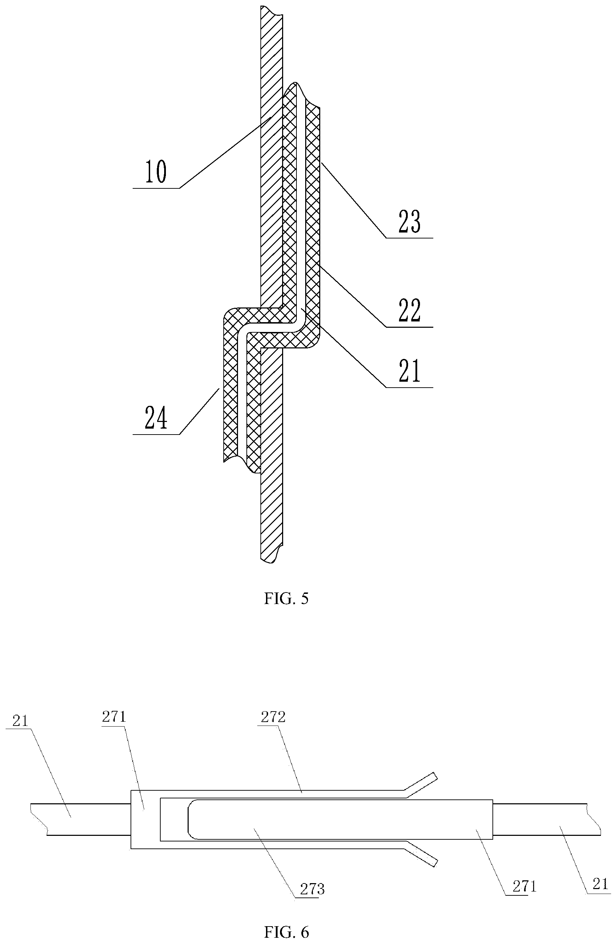

As illustrated in FIG. 5, on the basis of any one of the above embodiments, further, the conductive wires 20 may be arranged based on the position of the electrical unit in the automobile part and the structure inside the automobile part, and the conductive wires 20 may be disposed only on one side of the substrate 10 (e.g., an outer side or an inner side of the substrate 10).

Alternatively, a portion of the conductive wire 20 located inside the substrate 10 is an inner conductive wire 23, and a portion of the conductive wire 20 located outside the substrate 10 is an outer conductive wire 24. The substrate 10 is provided with a via-hole, and one of the inner conductive wire 23 and the outer conductive wire 24 is connected to the other by passing through the via-hole.

It should be noted that 'one of the inner conductive wire 23 and the outer conductive wire 24 is connected to the other by passing through the via-hole' means that the inner conductive wire 23 is connected to the outer conductive wire 24 by passing through the via-hole, or the outer conductive wire 24 is connected to the inner conductive wire 23 by passing through the via-hole.

In this embodiment, the number of the inner conductive wires 23 may be one, two, three, four, or the like, and the number of the outer conductive wires 24 may be one, two, three, four, or the like. The number of the inner conductive wires 23 and the number of the outer conductive wires 24 may be set depending on the specific internal structure and requirement of the door. When either of the above numbers is greater than 1, there are a plurality of connection spots between the inner and outer conductive wires, and then a plurality of via-holes are disposed correspondingly.

As illustrated in FIG. 1, on the basis of any one of the above embodiments, further, the conductive wire 20 includes a main conductive wire 25 and a plurality of branch conductive wires 26, and the number of the conductive cores 21 of the main conductive wire 25 is greater than that of the conductive cores 21 of the branch conductive wires 26.

In this embodiment, the automobile part is provided with a large number of electrical units, and each electrical unit should be electrically (for electric energy transmission) or communicatively (for signal transmission) to a power supply unit, or to be electrically or communicatively connected to the respective electrical units. There may be provided a main conductive wire 25 configured to entirely transmit electric energy or signals, and branch conductive wires 26 configured to connection with the respective electrical units or the power supply unit. The main conductive wire 25 and the branch conductive wire 26 may be connected through a terminal interface.

In this embodiment, the main conductive wire 25 and the branch conductive wire 26 are disposed independently of each other, and then a connection terminal is disposed at an end of the main conductive wire 25 facing the branch conductive wire 26 to connect the branch conductive wire 26, thereby realizing the connection between the main conductive wire 25 and the branch conductive wire 26.

Alternatively, the main conductive wire 25 and the branch conductive wire 26 are integrally formed, i.e., the conductive core 21 of the branch conductive wire 26 is integrally formed with the corresponding conductive core 21 of the main conductive wire 25, and the insulating layer 22 of the main conductive wire 25 is integrally formed with the insulating layer 22 of the branch conductive wire 26, thereby achieving a good sealing effect of the conductive wire 20 without additionally disposing a sealing member, which reduces the number of parts and the cost.

It should be noted that the main conductive wire 25 may have one portion disposed inside the substrate 10 and the other portion disposed outside the substrate 10; and the branch conductive wire 26 may have one portion disposed inside the substrate 10, and the other portion disposed outside the substrate 10, which may be arranged depending on the specific layout of the harness.

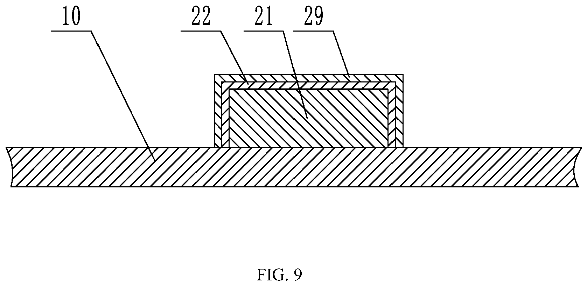

As illustrated in FIG. 9, the conductive wire 20 further includes a shielding layer 29 which wraps the conductive core 21 and is insulated therefrom, and the shielding layer 29 is located in or wraps the insulating layer 22. In this embodiment, by disposing the shielding layer, it may improve the anti-electromagnetic interference capability of the integrated harness assembly, and make the electrical signal connection more stable and reliable.

In this embodiment, the shielding layer 29 may be made of aluminum, copper, plastic with a shielding function, or the like.

The shielding layer 29 may have a plate-like structure, and may be formed by winding a foil strip such as an aluminum foil or a copper foil. The shielding layer 29 may also be a braided structure formed by braiding a material with a shielding function_{∘}

It is also possible to wrap the shielding layer 29 with a protective layer which protects the shielding layer.

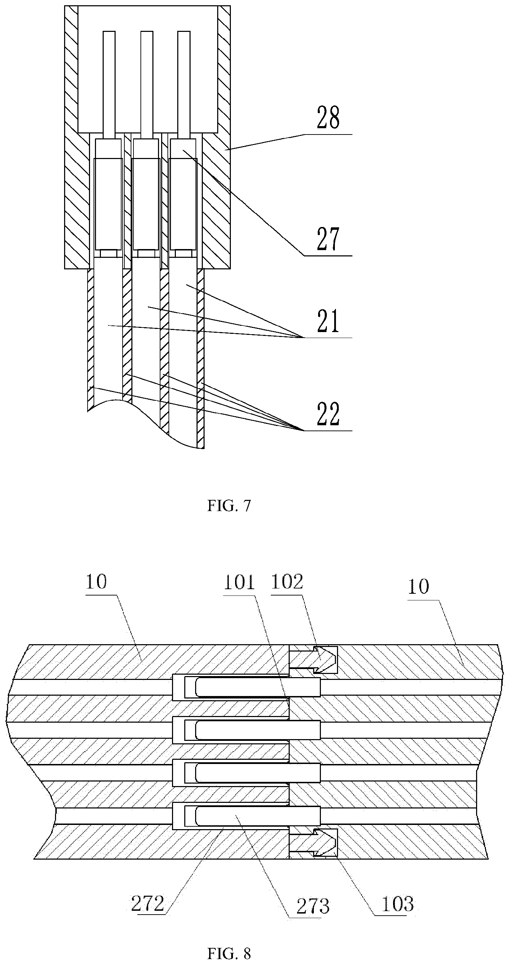

As illustrated in FIG. 6, on the basis of any one of the above embodiments, further, the integrated harness assembly further includes terminals 27 (as illustrated in FIG. 7), which each includes a connecting end 271 and a plugging end, in which the connecting end 271 is electrically connected to an end of the conductive core 21. The conductive core 21 performs transmission of power and signals, but a tail end of the conductive core 21 needs to be connected to any other integrated harness assembly or electrical device, and it is necessary to dispose terminals on the tail end of the conductive core 21, so that the electrical connection of the conductive core may be completed by plugging between the terminals.

The connecting end 271 and/or the plugging end is provided with a plating layer (the connecting end 271 is provided with a plating layer; or the plugging end is provided with a plating layer; or either of the connecting end 271 and the plugging end is provided with a plating layer), so as to improve the corrosion resistance, the conductivity and the plugging times, and better prolong the service lives of the connecting end 271 and the plugging end.

The plating layer may be made by electroplating, electroless plating, magnetron sputtering, vacuum plating or the like. The plating layers on the connecting end 271 and the plugging end have the same thickness, so as to be formed by electroplating at one time during processing, without carrying out complex electroplating to obtain different thicknesses of the plating layers in different areas, thereby saving the processing cost and reducing the electroplating pollution.

The electroplating is a process of plating a thin layer of other metal or alloy on a surface of some metal by using a principle of electrolysis.

The electroless plating is a deposition process in which a metal is produced through a controllable oxidation-reduction reaction under a metal catalytic action.

The magnetron sputtering is to use an interaction of a magnetic field and an electric field to make electrons move spirally near a target surface, thereby increasing the probability that electrons bombard argon to generate ions. The generated ions bombard the target surface under the action of the electric field so as to sputter a target material.

The vacuum plating is to deposit various metal films and non-metal films on the surface of plastic parts by means of distillation or sputtering under vacuum conditions.

The material of the plating layer on the connecting end 271 is different from that of the plating layer on the plugging end.

The plating layer is made of one or more of gold, silver, nickel, tin, zinc, tin-lead alloy, silver-antimony alloy, palladium, palladium-nickel alloy, graphite silver, graphene silver and silver-gold-zirconium alloy. As an active metal, copper will react with oxygen and water during use, so one or more inactive metals are needed as the plating layer to prolong the service life of the plugging terminals. In addition, for a metal contact point to be plugged and unplugged frequently, a metal with good wear resistance is also needed as the plating layer, thereby greatly prolonging the service life of the contact point. Moreover, the contact point requires good conductivity, and the above metals have better conductivity and stability than copper or copper alloy, so that the plugging terminals may obtain a better electrical performance and a longer service life.

Since the plugging end is a position for plugging and unplugging with a mating terminal frequently, and also a position for electrical connection with the mating end terminal, the plating layer on the plugging end is generally made of a metal material with excellent properties such as conductivity, stability, wear resistance, etc., but such metal is generally a precious metal with a high price. Since the connecting end 271 is a position for electrical connection with a conductor of a cable and does not require high stability or high wear resistance, a metal material with partially excellent properties but low price and usable in batches may be selected as the material of plating layer.

In order to demonstrate the influences of different materials of the plating layer on the overall performance of the plugging terminals, the inventor adopts the plugging terminal samples with same specification and material, and plating layers of different materials, and carries out a series of tests on the number of times of plugging and unplugging and the corrosion resistance time using matched plugging pieces of the same specification. In order to prove the advantages and disadvantages of the selected materials and other conventional plating materials, the inventor selects tin, nickel and zinc as the materials of the plating layer for experiment. The experimental results are shown in Table 1 below.

The number of times of plugging and unplugging in Table 1 are obtained as follows: the plugging terminals are fixed on an experimental platform respectively; a mechanical device is used to simulate the plugging and unplugging between the plugging terminals; after every 100 times of plugging and unplugging, it is necessary to stop and observe the damage of the plating layer on the surface of each terminal; if the plating layer on the surface of the terminal is scratched and the material of the terminal itself is exposed, the experiment is stopped, and then the number of times of plugging and unplugging at that time are recorded. In this embodiment, when the number of times of plugging and unplugging is less than 8000, it is considered as unqualified.

The test on the corrosion resistance time in Table 1 is to put a plugging terminal into a salt spray test chamber, spray salt fog for each position on the plugging terminal, take out and clean the plugging terminal every 20 hours to observe the surface corrosion, which is a cycle, stop the test when a corrosion area of the surface of the plugging terminal is more than 10% of a total area thereof, and then record the number of cycles at that time. In this embodiment, when the number of cycles is less than 80, it is considered as unqualified.

**Table 1: Influences of Different Materials of Plating Layer on the Number of Times of Plugging and Unplugging and Corrosion Resistance of Plugging Terminal**

| Different Materials of Plating Layer | | | | | | | | | | | |
|---|---|---|---|---|---|---|---|---|---|---|---|
| Gold | Silver | Silver-antimony alloy | Graphite silver | Graphene silver | Silver-gold-zirconium alloy | Tin | Nickel | Palladium | Palladium-nickel alloy | Tin-lead alloy | Zinc |
| Number of Times of Plugging and Unplugging | | | | | | | | | | | |
| 12400 | 11800 | 12200 | 12500 | 12700 | 13100 | 8200 | 8300 | 11000 | 12100 | 9800 | 8500 |

| Number of Cycles of Corrosion Resistance Tests | | | | | | | | | | | |
|---|---|---|---|---|---|---|---|---|---|---|---|
| 134 | 128 | 125 | 130 | 127 | 132 | 86 | 88 | 111 | 118 | 110 | 84 |

As can be seen from Table 1, when the material of the plating layer is selected from gold, silver, silver-antimony alloy, palladium, palladium-nickel alloy, graphite silver, graphene silver or silver-gold-zirconium alloy, the experimental result largely exceeds the standard value and the performance is stable. When the material of the plating layer is selected from nickel, tin, tin-lead alloy or zinc, the experimental result also meets the requirement. Thus, the material of the plating layer is selected from one or combinations of gold, silver, nickel, tin, tin-lead alloy, zinc, silver-antimony alloy, palladium, palladium-nickel alloy, graphite silver, graphene silver and silver-gold-zirconium alloy.

The plating layer includes a bottom layer and a surface layer.

In some embodiments, the plating layer is formed using a multi-layer plating method. After the connecting end 271 and/or the plugging end is processed, there are still many cracks and holes under a micro-interface of the surface. These cracks and holes are the main reasons for the wearing and corrosion of the connecting end 271 and/or the plugging end during use. Therefore, it is necessary to firstly plate a bottom layer on the surface of the connecting end 271 and/or the plugging end to fill the cracks and holes therein, so that the surface of the connecting end 271 and/or the plugging end is smooth and free of defects, and then plate a surface layer, so that the binding is firmer and smoother and the surface of the plating layer has no cracks or holes. As a result, the wear resistance, the corrosion resistance and the electrical performance of the plugging terminal are better, and the service life of the plugging terminal is greatly prolonged.

The bottom layer is made of one or more of gold, silver, nickel, tin, tin-lead alloy and zinc; and the surface layer is made of one or more of gold, silver, nickel, tin, tin-lead alloy, silver-antimony alloy, palladium, palladium-nickel alloy, graphite silver, graphene silver and silver-gold-zirconium alloy.

In another embodiment, the bottom layer has a thickness of 0.01 µm to 15 µm (e.g., 0.01 µm, 1 µm, 5 µm, 10 µm or 15 µm), and optionally a thickness of 0.1 µm to 9 µm (e.g., 0.1 µm, 0.5 µm, 1 µm, 6 µm, 8 µm or 9 µm).

In another embodiment, the surface layer has a thickness of 0.5 µm to 55 µm (e.g., 0.5 µm, 10 µm, 20 µm, 30 µm, 45 µm or 55 µm), and optionally a thickness of 1 µm to 35 µm (e.g., 1 µm, 8 µm, 15 µm, 20 µm, 28 µm or 35 µm).

In order to demonstrate the influence of the change of the thickness of the bottom layer of the plating layer on the overall performance of the plugging terminal, the inventor adopts the plugging terminal samples with same specification and material, nickel-plated bottom layers of different thicknesses and the silver-plated surface layers of the same thickness, and carries out a series of tests on the temperature rise and the corrosion resistance time using the matched plugging pieces of the same specification. The experimental results are shown in Table 2 below.

The test on the temperature rise in Table 2 is to supply the same power to the plugging terminal and the mating terminal which have been plugged, detect the temperatures of the plugging terminal at the same position before the power supply and after the temperature is stable in a closed environment, and obtain an absolute value of a difference therebetween. In this embodiment, when the temperature rise is greater than 50K, it is considered as unqualified.

The test on the corrosion resistance time in Table 2 is to put a plugging terminal into a salt spray test chamber, spray salt fog for each position on the plugging terminal, take out and clean the plugging terminal every 20 hours to observe the surface corrosion, which is a cycle, stop the test when a corrosion area of the surface of the plugging terminal is more than 10% of a total area thereof, and then record the number of cycles at that time. In this embodiment, when the number of cycles is less than 80, it is considered as unqualified.

**Table 2: Influences of Different Thicknesses of Bottom Layer on Temperature Rise and Corrosion Resistance of Plugging Terminal**

| Different Nickel-Plated Thicknesses of Bottom Layer (µm) | | | | | | | | | | | | | | | |
|---|---|---|---|---|---|---|---|---|---|---|---|---|---|---|---|
| 0.001 | 0.005 | 0.01 | 0.05 | 0.1 | 0.5 | 1 | 3 | 5 | 6 | 9 | 11 | 13 | 15 | 17 | 19 |

| Temperature Rise of Plugging Piece (k) | | | | | | | | | | | | | | | |
|---|---|---|---|---|---|---|---|---|---|---|---|---|---|---|---|
| 10.7 | 12.3 | 14.9 | 16.6 | 18.2 | 21.9 | 24.5 | 26.7 | 28.6 | 31.3 | 35.9 | 40.5 | 43.5 | 47.8 | 58.1 | 67.4 |

| Number of Cycles of Corrosion Resistance Tests | | | | | | | | | | | | | | | |
|---|---|---|---|---|---|---|---|---|---|---|---|---|---|---|---|
| 67 | 78 | 82 | 93 | 105 | 109 | 113 | 117 | 120 | 124 | 128 | 129 | 130 | 130 | 129 | 127 |

As can be seen from Table 2, although the temperature rise of the plugging terminal is qualified when the thickness of the nickel-plated bottom layer is less than 0.01 µm, the number of cycles of corrosion resistance tests of the plugging terminal is less than 80 since the bottom layer is thin, and the performance requirement of the plugging terminal cannot be met, which greatly affects the overall performance and the service life of the plugging piece, and causes the product life to be reduced sharply or even failure burning accidents in serious cases. When the thickness of the nickel-plated bottom layer is greater than 15 µm, the heat generated by the plugging terminal cannot be radiated since the bottom layer is thick, which makes the temperature rise of the plugging terminal unqualified, and the plating layer with the thick bottom layer is easy to fall off the surface of the plugging terminal, resulting in a decrease in the number of cycles of corrosion resistance tests. Thus, the thickness of the bottom layer is selected to be 0.01 µm to 15 µm. Optionally, the comprehensive effect of the temperature rise and the corrosion resistance of the plugging terminal is better when the thickness of the bottom layer is 0.1 µm to 9 µm. Therefore, in order to further improve the safety, reliability and practicability of the product itself, it is optional that the thickness of the bottom layer is 0.1 µm to 9 µm.

In order to demonstrate the influence of the change of the thickness of the surface layer of the plating layer on the overall performance of the plugging terminal, the inventor adopts the plugging terminal samples with same specification and material, nickel-plated bottom layers of the same thickness, and the silver-plated surface layers of different thicknesses, and carries out a series of tests on the temperature rise and the corrosion resistance time using the matched plugging pieces of the same specification. The experimental results are shown in Table 3 below.

The experimental method is the same as that described above.

**Table 3: Influences of Different Thicknesses of Surface Layer on Temperature Rise and Corrosion Resistance**

| Different Silver-Plated Thicknesses of Surface Layer (µm) | | | | | | | | | | | | | | | | |
|---|---|---|---|---|---|---|---|---|---|---|---|---|---|---|---|---|
| 0.1 | 0.5 | 1 | 1.5 | 5 | 10 | 15 | 20 | 25 | 30 | 35 | 40 | 45 | 50 | 55 | 60 | 65 |

| Temperature Rise of Plugging Piece (k) | | | | | | | | | | | | | | | | |
|---|---|---|---|---|---|---|---|---|---|---|---|---|---|---|---|---|
| 11.4 | 13.8 | 15.2 | 17.5 | 21.8 | 23.9 | 25.3 | 28.6 | 31.8 | 35.4 | 38.9 | 42.7 | 45.3 | 48.4 | 49.5 | 53.8 | 69.6 |

| Number of Cycles of Corrosion Resistance Tests | | | | | | | | | | | | | | | | |
|---|---|---|---|---|---|---|---|---|---|---|---|---|---|---|---|---|
| 75 | 82 | 91 | 93 | 95 | 97 | 98 | 103 | 105 | 109 | 113 | 117 | 119 | 122 | 125 | 124 | 121 |

As can be seen from Table 3, although the temperature rise of the plugging terminal is qualified when the thickness of the silver-plated surface layer is less than 0.5 µm, the number of cycles of corrosion resistance tests of the plugging terminal is less than 80 since the surface layer is thin, and the performance requirement of the plugging terminal cannot be met, which greatly affects the overall performance and the service life of the plugging piece, and causes the product life to be reduced sharply or even failure burning accidents in serious cases. When the thickness of the silver-plated surface layer is greater than 55 µm, the heat generated by the plugging terminal cannot be radiated since the surface layer is thick, which makes the temperature rise of the plugging terminal unqualified, and the plating layer with the thick surface layer is easy to fall off the surface of the plugging terminal, resulting in a decrease in the number of cycles of corrosion resistance tests. Moreover, since the surface layer is made of precious metal, the plating layer with the thick surface layer does not improve the performance has no use value. Thus, the thickness of the silver-plated surface layer is selected to be 0.1 µm to 55 µm.

Optionally, the comprehensive effect of the temperature rise and the corrosion resistance of the plugging terminal is better when the thickness of the surface layer is 1 µm to 35 µm. Therefore, in order to further improve the safety, reliability and practicability of the product itself, it is optional that the thickness of the surface layer is 1 µm to 35 µm.

As illustrated in FIG. 6, on the basis of any of the above embodiments, further, the connecting end 271 and the conductive core 21 are electrically connected by crimping, welding or integral formation.

The crimping is a production process of assembling the connecting end 271 of the terminal and the conductive core 21, and then stamping them into a whole using a crimping machine. The advantage of the crimping is mass production, and products with stable quality may be manufactured quickly and in large quantities by using interlocking terminals and an automatic crimping machine.

The welding includes one or more of friction welding, ultrasonic welding, arc welding, laser welding mode and resistance welding.

The friction welding refers to a method of welding by taking heat generated by the friction of a contact surface of a workpiece as a heat source to plastically deform the workpiece under pressure.

The ultrasonic welding is to transmit high-frequency vibration waves to the surfaces of two objects to be welded, so that under pressure, the surfaces of the two objects rub against each other to fuse molecular layers.

The arc welding is to convert electric energy into heat energy and mechanical energy required for welding by using electric arc as a heat source and the physical phenomenon of air discharge, so as to connect metals. The arc welding mainly includes shielded metal arc welding, submerged arc welding and gas shielded welding, etc.

The laser welding is an efficient and precise welding method using a laser beam with a high energy density as a heat source.

The resistance welding refers to a method of welding by using strong current to through a contact point between an electrode and a workpiece and generating heat by a contact resistance.

The integral formation means that terminals are directly formed on the conductive core 21, and the processing of connection between the connecting end 271 and the conductive core 21 is no longer required, thereby reducing the processing procedures and improving the production efficiency.

As illustrated in FIG. 6, on the basis of any of the above embodiments, further, the plugging end includes a male pin 273 and a female slot 272, and the male pin 273 and the female slot 272 belong to different integrated harness assemblies or electrical devices, respectively, and an electrical loop is formed by the plugging between the male pin 273 and the corresponding female slot 272. In general, the electrical connection between integrated harness assemblies or between an integrated harness assembly and an electrical device needs to be detachable, but when the plugging ends are plugged as a whole, the electrical connection cannot be detached. Thus, it is necessary to provide the plugging ends with a male pin 273 and a female slot 272, and form an electrical loop by the plugging therebetween.

As illustrated in FIG. 7, on the basis of any of the above embodiments, further, the conductive wire 20 includes a sheath 28, which is disposed at an end of the conductive wire 20 to protect the terminals 27. In this embodiment, the terminals 27 are disposed at the end of the conductive wire 20 and connected to the conductive core 21 of the end to form an electrical interface, which may be electrically connected to any other electrical unit or power supply unit. The sheath 28 is disposed outside the conductive wire 20 to protect the terminals 27. The length of the sheath 28 may be longer than that of the terminal 27, so as to also protect an end of the electrical unit or the power supply unit connected to the terminal 27, i.e., protect a joint between the conductive wire 20 and another component.

The conductor and the terminals 27 may be connected by crimping or welding and then integrally inserted into the sheath 28, and a protrusion on the terminal 27 is clamped in clamping grooves of the sheath 28, thereby fixing the terminals 27 and the conductive core 21 inside the sheath 28. The sheath 28 is plugged into the interface of the electrical unit (or the power supply unit), and the terminals 27 in the sheath 28 are plugged into the terminals of the electrical unit (or the power supply unit) in one-to-one correspondence, respectively, so as to conduct current, and the sheath 28 is clamped with the electrical unit (or the power supply unit) through a latch.

When the main conductive wire 25 and the branch conductive wire 26 are integrally formed, the terminals 27 and the sheath 28 may be disposed at a tail end of the branch conductive wire 26.

On the basis of any of the above embodiments, further, the connection between the conductive wire 20 and the substrate 10 may be realized by clamping, viscose connection or snapfit connection.

Alternatively, as illustrated in FIGS. 2 and 3, the conductive core 21 is disposed on the substrate 10, the insulating layer 22 is injection-molded and fixed on the substrate 10, and the insulating layer 22 wraps the conductive core 21.

The insulating layer 22 in the conductive wire 20 may be made of polycarbonate, polyvinyl chloride (PVC), polyurethane (PUR), nylon (PA), TPU, silicone rubber (SIR), XLPO, TPU, TPV, polysulfone, polytetrafluoroethylene, polyethylene, polyphenylene ether, polyester, PPS, phenolic resin, urea formaldehyde, DAP, TPE, PFE, perfluoroalkoxy alkane, TPE-S, PBT, EZM, styrene-acrylonitrile copolymer, ABS, polymethacrylate, EVA, polyphenylene sulfide, polystyrene, PBT, polyoxymethylene resin, styrene-butadiene rubber, nitrile rubber, butadiene rubber, isoprene rubber, ethylene-propylene rubber, chloroprene rubber, butyl rubber, fluororubber, polyurethane rubber, epichlorohydrin rubber, chlorinated polyethylene rubber, chlorine-sulfur rubber, butadiene rubber, hydrogenated nitrile rubber or polysulfide rubber, etc.

In this embodiment, the conductive core 21 of the conductive wire 20 is disposed on the substrate 10, the insulating layer 22 of the conductive wire 20 is injection-molded outside the conductive core 21, and the insulating layer 22 is also fixedly connected to the substrate 10 while being injection-molded, which is beneficial to realizing mass, automatic and intelligent production and carrying out pre-manufacturing in factory.

When the integrated harness assembly according to the embodiment is used, the substrate thereof may be directly connected to an automobile part, thus avoiding manually fixing and mounting the harness for electrical connection, simplifying the manual operation procedure, saving man-hours and improving the harness mounting efficiency. Similarly, when the automobile part is damaged, it is only necessary to directly replace the integrated harness assembly according to the embodiment, without manually removing and mounting wires, thereby improving the efficiency of maintenance and mounting, saving man-hours and reducing the cost of maintenance and mounting.

In addition, the insulating layer 22 of the integrated harness assembly according to the embodiment is formed and fixed on the substrate 10 by a 3D printing process, or an injection molding process, or a spraying process, or a dip molding process, or a slush molding process, or an electrophoresis process, or a printing process, so that the conductive wire 20 is closely attached to the substrate 10. Since the conductive wire 20 is firm and stable, it is possible to avoid a friction damage of the conductive wire 20 and prevent abnormal sound caused by the looseness of the conductive wire 20 during travelling of the automobile, thereby avoiding the arrangement of a sound insulation structure and further reducing the cost.

The 3D printing process is a kind of rapid prototyping technology, which is based on digital model files and uses adhesive materials such as powdered metal or plastic to construct an object by printing layer by layer.

The injection molding process refers to a process in which a molten raw material is pressurized, injected, cooled and separated by an injection molding machine, so as to fabricate a finished product with a certain shape in a mold with a corresponding shape.

The spraying process, also called as an ejection process, is a formation process in which a chopped fiber reinforcing material and a resin system are simultaneously sprayed in a cavity, and then compacted and secured into a thermosetting composite product.

The dip molding process is a kind of plastic coating process, and may be divided into powder dip molding and liquid dip molding depending on the raw material of dip molding. The powder dip molding is usually used to coat a metal surface and is characterized by firm and hard bonding of a powder coating layer. In the liquid dip molding, hot dip molding liquid is used mostly, and a thermoplastic coating film has the characteristics of being softened when heated and cured into a film when cooled. The liquid dip molding is mainly a physical melting and plastic molding process, and the processing and production are simple. The coating layer obtained by the liquid dip molding is thick and soft, and may serve as a product having an independently protective capability from the mold.

The slush molding is also called as slush casting, which is an important method to prepare hollow soft products with paste plastics. The slush molding has the advantages of low device cost, high production speed and simple process control, but the accuracies of the thickness and the weight of the product are poor.

The electrophoresis process is a process in which a water-soluble charged organic paint is uniformly dissolved in a solution, a metal material and a workpiece to be processed are taken as a positive electrode or a negative electrode, and current is conducted to adhere the organic paint to the workpiece to be processed, so as to obtain a finished product by drying and securing.

The printing process includes sheet-fed offset printing, inkjet printing, screen printing, etc., and it is a process of transferring ink or any other material to a target object according to a set shape and pattern.

On the basis of any of the above embodiments, further, the insulating layer has a breakdown strength of 0.3 KV/mm to 35 KV/mm (e.g., 0.3 KV/mm, 10 KV/mm, 20 KV/mm or 35 KV/mm, etc.). The breakdown strength is also called as a dielectric breakdown strength, which refers to a highest electric field strength that a material can withstand without being damaged (broken down) in an electric field. When the breakdown strength of the insulating layer is lower than 0.3 KV/mm, a thin part of the insulating layer may be broken down under a normal voltage, resulting in invalid insulation. When the breakdown strength of the insulating layer is higher than 35 KV/mm, and the choice of a material with too high breakdown strength will increase the cost of the integrated harness assembly and cause design waste, because a high voltage greater than 35 KV will not occur in the general vehicle-mounted environment.

On the basis of any of the above embodiments, further, the insulating layer has a thickness of 0.03 mm to 5 mm (e.g., 0.03 mm, 0.1 mm, 1 mm, 2 mm, 3 mm, 4 mm or 5 mm, etc.). If the thickness of the insulating layer is less than 0.03 mm, not only the breakdown voltage of the insulating layer cannot be ensured to be higher than the working voltage, but also the wear resistance of the insulating layer cannot be guaranteed. After repeated scraping and grinding, the insulating layer may be damaged to expose the conductive core 21, which leads to a current leakage or a short circuit, resulting in a line damage and a functional failure. When the thickness of the insulating layer is 5 mm, the breakdown voltage, the insulation resistance and the wear resistance of the insulating layer may meet the requirements. However, if the thickness is greater than 5 mm, there may be defects such as air holes and collapses during processing due to the large thickness of the insulating layer, which degrades the performance and wastes the material of the insulating layer, and increases the processing procedures and time. Therefore, the thickness of the insulating layer is selected to be 0.03 mm to 5 mm.

In this embodiment, the conductive core 21 may be disposed on the substrate 10 by a 3D printing process, a laser powder sintering process, a metal deposition process, a metal injection molding process, a laser etching process, a conductive ink printing process or a printed circuit board process.

The 3D printing process is a kind of rapid prototyping technology, which is based on digital model files and uses adhesive materials such as powdered metal or plastic to construct an object by printing layer by layer.

The laser powder sintering process is a technology that takes laser as a heat source to sinter powder compacts.

The metal deposition process is to spray metal powder by a nozzle, and the nozzle provides high-power laser and inert gas for protection while spraying the metal powder, so that the metal powder may be rapidly molded.

The metal injection molding process refers to a process in which metal powder and binder that meet the requirements are selected, then mixed into a uniform feed material at a temperature by an appropriate method, and granulated and injection-molded, and the formed blank is sintered and densified after a degreasing process to form the final product.

The laser etching process is to use laser to directly cut and ablate a metal plate or foil into a required shape.

The conductive ink printing process and the printing process includes sheet-fed offset printing, inkjet printing, screen printing, etc., which is a process of transferring ink or any other material to a target object according to a set shape and pattern. The ink may also be made of metal powder, a carbon-containing compound such as graphene, etc.

In the printed circuit board process, a photosensitive cross-linked and secured pattern is formed on the metal plate or foil on the substrate through exposure and development, and then etched to retain the required conductive portion.

As illustrated in FIG. 2, an anchoring member 30 may be fixed on the substrate 10 and embedded in the insulating layer 22, so that the insulating layer 22 is injection-molded and fixed on the substrate 10.

The anchoring member 30 may include a first portion 31 and a second portion 32, in which one end of the first portion 31 is connected to the substrate 10, and the other end thereof is connected to the second portion 32. Both the first portion 31 and the second portion 32 may be disposed as a column-shaped, rod-shaped, plate-shaped or frame structure. The anchoring member 30 formed by the first portion 31 and the second portion 32 may have various structural forms, e.g., a cross-sectional area of the second portion 32 is greater than that of the first portion 31; or the first portion 31 and the second portion 32 are disposed at an acute angle, a right angle or an obtuse angle (e.g., the first portion 31 and the second portion 32 are disposed in an L-shape or a T-shape, and the second portion 32 may also be disposed in a Y-shape, a star-shape or any other structure).

During the injection molding of the insulating layer 22, the anchoring member 30 is wrapped by injection molding slurry. When the insulating layer 22 is formed, the anchoring member 30 is also buried in the insulating layer 22, thereby completing the connection and fixation with the insulating layer 22, so that the insulating layer 22 is fixed on the substrate 10.

The anchoring member 30 may be fixed on the substrate 10 by interference connection, threaded connection, welding, gluing or integral formation. The number and position of the anchoring members 30 may be set based on the layout and length of the conductive wire 20.

For another example, as illustrated in FIG. 3, the integrated harness assembly further includes a fixing member 40 which is integrally formed with the insulating layer 22 by injection molding, and the fixing member 40 and a portion of the insulating layer 22 corresponding to the fixing member 40 are disposed on two sides of the substrate 10, respectively.

In this embodiment, the fixing member 40 and a portion of the insulating layer 22 corresponding to the fixing member 40 are disposed on two sides of the substrate 10, respectively, and the fixing member 40 prevents the insulating layer 22 from falling off the substrate 10, thereby fixing the insulating layer 22 on the substrate 10. The fixing member 40 and the insulating layer 22 are integrally formed by injection molding, so that they are connected while being formed and the efficiency is high. In addition, by forming the fixing member 40 during the formation of the insulating layer 22, it is possible to avoid the anchoring member 30 from being disposed on the substrate 10, prevent the structure of the substrate 10 from being increased, and facilitate processing and manufacturing.

In this embodiment, the fixing member 40 and the portion of the insulating layer 22 corresponding to the fixing member 40 are disposed on two sides of the substrate 10, respectively, and there are many ways to realize integrated injection molding. For example, a contact corner is disposed on a sidewall of the insulating layer 22, the contact corner has one end connected to the insulating layer 22 and the other end located at an edge of the substrate 10, and the fixing member 40 is located on the other side of the substrate 10 and is connected to the other end of the contact corner. That is, during the injection molding, the injection molding slurry flows from one side to the other side of the substrate 10 (e.g., from an outer side to an inner side of the substrate 10, or from the inner side to the outer side of the substrate 10) around the edge of the substrate 10, and one portion of the injection molding slurry forms the insulating layer 22 and the other portion thereof forms the fixing member 40.

Alternatively, as illustrated in FIG. 3, the substrate 10 is provided with a connecting hole; the fixing member 40 includes a fixing portion 41 and a connecting portion 42; the connecting portion 42 has one end connected to the fixing portion 41, and the other end connected to the insulating layer 22 passing through the connecting hole; and a cross-sectional area of the fixing portion 41 is greater than an area of the connecting hole.

In this embodiment, a fixed point may be set as required, and a connecting hole may be disposed at the fixed point. During injection molding, the injection molding slurry may flow from one side to the other side of the substrate 10 via the connecting hole. The slurry on one side of the substrate 10 forms the insulating layer 22, the slurry inside the connecting hole forms the connecting portion 42, the slurry on the other side of the substrate 10 forms the fixing portion 41, and the connecting portion 42 and the fixing portion 41 form the fixing member 40. At this time, the fixing portion 41 and the insulating layer 22 are respectively located on two sides of the substrate 10 at the position of the connecting hole. With this structure, the fixing member 40 is disposed flexibly, and the position thereof may be set depending on the mounting space of the substrate 10; moreover, the injection molding slurry directly flows through the substrate 10 via the connecting hole, so that a long-distance flow is avoided, which on the one hand saves the raw material, and on the other hand improves the injection efficiency.

In this embodiment, the fixing portion 41 may be disposed as triangular, square, circular, elliptical, or elongated.

Alternatively, as illustrated in FIG. 3, the fixing portion 41 is frustum-shaped, and has a diameter gradually reduced in a direction away from the substrate 10.

In this embodiment, the fixing portion 41 is frustum-shaped, i.e., a longitudinal cross section of the fixing portion 41 is trapezoidal. Such a fixing portion 41 has a simple structure, so that the mold is simple and demolding is easy.

In which, the number of the fixing members 40 may be one, two, three, four, five, or the like, which may be set as needed.

It should be noted that when the insulating layer 22 is injection-molded and fixed on the substrate 10 by means of the anchoring member 30, the mold for injection molding may be simple; and when the insulating layer 22 is injection-molded and fixed on the substrate 10 by means of the fixing member 40, it is possible to prevent the structure of the substrate 10 from being increased or the substrate 10 from being secondarily processed, and avoid a large or uneven thickness of the insulating layer 22. Of course, both the anchoring member 30 and the fixing member 40 may also be disposed on the substrate 10, so that the conductive wire 20 is fixed more firmly and stably.

When the conductive wire 20 includes a plurality of conductive cores 21 and a plurality of insulating layers 22, the conductive cores 21 are sleeved by the insulating layers 22 in one-to-one correspondence. In this embodiment, the conductive wire 20 may include a plurality of conductive cores 21, thereby realizing the independent electrical connection of each of a plurality of channels.

In this embodiment, the plurality of insulating layers 22 may be injection-molded independently of each other.

Alternatively, the plurality of insulating layers 22 are integrally formed. That is, the insulating layers 22 corresponding to the plurality of conductive cores 21 are injection-molded into a whole by a mold, so that the production efficiency of the insulating layers 22 is high and the connection is stable and reliable.

Alternatively, the integrated harness assembly further includes a sealing member, which is disposed on the substrate 10 or the insulating layer 22 by integral injection molding. In many cases, an electrical device in the automobile work outdoors and water will inevitably flow thereinto. In order to ensure the safety of electrical connection and the service life of the electrical device, it is necessary to provide a sealing element, which cooperates with the substrate 10 to effectively seal the electrical device and prevent external water from entering the electrical device. The sealing member is made of a rubber material which has good elasticity, and may be extruded and deformed after the substrate 10 is assembled with the electric device, so as to form a sealing structure to prevent water from entering the electric device. In addition, the rubber material has good water resistance and oil resistance, which prolongs the service life of the sealing structure.

Alternatively, the conductive core 21 is made of one or combinations of metal, conductive ceramic, carbon-containing conductor, solid electrolyte, mixed conductor and conductive polymer material.

Further, the conductive core 21 is made of one or more of nickel, cadmium, zirconium, chromium, cobalt, manganese, aluminum, tin, titanium, zinc, copper, silver and gold. Optionally, the conductive core 21 is made of copper or copper alloy, or aluminum or aluminum alloy. Copper has good conductivity and ductility, and is preferable for the conductor material of cables. However, with the increasing price of copper, the material cost of the conductor made of copper is higher and higher. To this end, people begin to look for alternatives to copper to reduce the cost. The content of aluminum in the earth's crust is about 7.73%, and after the optimization of refining technology, the price thereof is relatively low. In addition, compared with copper, aluminum is lighter, and its conductivity is second only to copper, so that aluminum may partially replace copper in the field of electrical connection. Therefore, replacing copper with aluminum is a development trend in the field of automobile electrical connections.

In other embodiments, any other nonmetallic material may be used as the conductive core 21, such as graphene in the carbon-containing conductor, which is also an excellent conductor material.

Further, the conductive core 21 has a cross-sectional area of 0.1 mm² to 260 mm² (e.g., 0.1 mm², 50 mm², 100 mm², 150 mm², 200 mm² or 260 mm²). In the harness, the cross-sectional area of the conductive core 21 determines the current that the conductive core 21 conducts. In general, the conductive core 21 that realizes signal conduction has small current, so the cross-sectional area thereof is small. For example, a minimum cross-sectional area of the conductive core 21 of the signal line in the harness of the automobile may be 0.1 mm². But the conductive core 21 that realizes power conduction has large current, so the cross-sectional area thereof is large. For example, a maximum cross-sectional area of the conductive core 21 in the harness for the battery of the automobile reaches 260 mm². When having a small cross-sectional area, the conductive core 21 may be laid by a wire feeding mechanism, and when having a large cross-sectional area, the conductive core 21 may be subjected to 3D printing or the formed conductive core 21 may be directly laid.

An embodiment of a second aspect of the present disclosure provides a method for manufacturing an integrated harness assembly, including:
forming a substrate;
disposing a conductive core on the substrate; and
putting the substrate with the conductive core into a mold and forming an insulating layer outside a conductive wire by injection molding.

In this embodiment, the substrate may be formed by casting or stamping (a structure such as a hole or a reinforcing rib may be formed on the substrate, according to the set shape to be formed), and sheet metal stamping may be optionally adopted, which achieves a good strength, a light weight and a high processing efficiency. Next, the conductive core is disposed on the substrate, and the conductive core may be supported by an external auxiliary tool, such as a tray, a bracket, or a bearing plate made of a material that may disappear during injection molding, so that there is a set interval (e.g., a wall thickness of the insulating layer) between the conductive core and the substrate. The whole substrate with the conductive core is put into a mold for injection molding. During injection molding, the substrate may be used as a part of the injection mold to form the insulating layer, so that the insulating layer and the substrate is closely attached to each other without a gap, the structure of the integrated harness assembly is compact, the conductive wire is stable without looseness, and the conductive wire is prevented from being worn.

In the method for manufacturing the integrated harness assembly according to the embodiment, the integrated harness assembly integrates the harness for electrical connection, and is beneficial to realizing mass, automatic and intelligent production. When the door is assembled, the integrated harness assembly according to the embodiment may be directly connected to an automobile part, thereby avoiding again manually fixing and mounting the harness for electrical connection, simplifying the manual operation procedure, saving man-hours and improving the harness mounting efficiency. Similarly, when the automobile part is damaged, it is only necessary to directly replace the integrated harness assembly according to the embodiment, without manually removing and mounting wires, thereby improving the efficiency of maintenance and mounting, saving man-hours and reducing the cost of maintenance and mounting.

Specifically, to dispose conductive cores on the substrate, the formed conductive core may be laid on the substrate, or disposed on the substrate by a 3D printing process, a laser powder sintering process, a metal deposition process, a metal injection molding process, a laser etching process, a conductive ink printing process or a printed circuit board process.

The 3D printing process is a kind of rapid prototyping technology, which is based on digital model files and uses adhesive materials such as powdered metal or plastic to construct an object by printing layer by layer.

The laser powder sintering process is a technology that takes laser as a heat source to sinter powder compacts.

The metal deposition process refers to a process in which simple metal ions or complex-ions are reduced into metal atoms on a solid surface by an electrochemical method, and then attached to an electrode surface to obtain a metal layer.

The metal injection molding process refers to a process in which metal powder and binder that meet the requirements are selected, then mixed into a uniform feed material at a temperature by an appropriate method, and granulated and injection-molded, and the formed blank is sintered and densified after a degreasing process to form the final product.

The laser etching process refers to a process in which a high-energy pulsed laser beam is adopted to etch a surface of a part to obtain the required shape.

The conductive ink printing process adopts an ink made of a conductive material using a conducting technology, which provides a new generation of flexible printing solutions for products in various industries.

The printed circuit board process is configured with a `pattern plating method' in which a lead-tin corrosion-resistant layer is pre-plated, on a part of a copper foil that needs to be preserved on an outer layer of a board, i.e., on a pattern portion of a circuit, and then the remaining copper foil is corroded chemically, which is also called etching.

After the step of disposing a conductive core on the substrate, and before the step of putting the substrate with the conductive core into a mold and forming an insulating layer outside a conductive wire by injection molding, the method further includes: disposing terminals and a sheath at an end of a conductive core, i.e., forming an insulating layer by injection molding is taken as the last step, so that the conductive core is wrapped more completely to be avoided from being exposed too much or even avoided from being exposed.

The integrated harness assembly according to the embodiment further includes a plurality of substrates 10. As illustrated in FIG. 8, the plurality of substrates 10 include different splicing surfaces 101 which are connected by welding, clamping, threaded connection, riveting, bonding, magnetic attraction connection or plugging.

In practical application scenarios, it is impossible to complete the layout of all lines just using a single substrate 10 in some environments, and it is necessary to assemble a plurality of parts into a finished product in some environments. Therefore, during the design and manufacturing of the integrated harness assembly, the substrate thereof is divided into a plurality of parts, and a conductive wire 20, terminals 27 and a sheath 28 are respectively formed, which are then assembled. Thus, it is possible to reduce the difficulty in processing, or only replace a damaged part of the integrated harness assembly when the integrated harness assembly is partially damaged, without replacing all the substrates 10 or all the conductive wires 20, thereby improving the production efficiency and reducing the maintenance cost.

The welding, also called as fusion, is a manufacturing process and technology of bonding metals or other thermoplastic materials such as plastics by using heating, high temperature or high pressure method. There are many energy sources for modern welding, including gas flame, electric arc, laser, electron beam, friction, ultrasound, etc.

The clamping is to clamp a plurality of substrates 10 together using a component such as a hoop. The clamping has the advantage of not requiring complex devices and achieving a connection by tools, which is suitable for scenarios such as repairing and maintenance.

The threaded connection uses a threaded structure that enables a plurality of substrates 10 to be in threaded connection, or connects the substrates 10 together using separate studs and nuts. The threaded connection has the advantage of detachability, i.e., assembling and detaching can be repeated, which is suitable for scenarios that require frequent detaching.

The riveting adopts rivets to rivet a plurality of substrates 10 together. The riveting has the advantages of firm connection, processing with simple method and easy operation.

The bonding is to firmly connect the same or different materials together by means of an adhesive force generated by an adhesion agent on a solid surface.

The magnetic attraction connection is configured to arrange a magnetic material on splicing surfaces 101 of a plurality of substrates 10, and achieve a connection by the magnetic attraction therebetween, which is suitable for positions where a high binding force is not required and detaching need to be made frequently.

The plugging is to arrange pins 102 and slots 103 on splicing surfaces 101 of a plurality of substrates 10, and achieve the connection between the splicing surfaces 101 through the mating connection between the pins 102 and slots 103, as illustrated in FIG. 8.

An embodiment of a third aspect of the present disclosure provides an automobile, including a door, a body roof, a bumper and the integrated harness assembly according to any one of the above technical solutions, and at least one of the door, the body roof and the bumper is provided with the integrated harness assembly.

The integrated harness assembly according to the embodiment of the present disclosure may be directly mounted in at least one of the door, the body roof and the bumper, so that the integrated harness assembly may be substantially connected to the above automobile part, thereby realizing the connection between the integrated harness assembly and the automobile part, avoiding mounting a plurality of harnesses into the automobile part one by one, and achieving a high mounting efficiency.

In this embodiment, the integrated harness assembly according to the embodiment of the present disclosure may be mounted in the door, may be mounted in the body roof, may be mounted in the bumper; may be mounted in the door and the body roof, may be mounted in the body roof and the bumper, may be mounted in the door and the bumper; may be mounted in the door, the body roof and the bumper.

Taking the door as an example, which includes at least one electrical unit, an outer door panel, an inner door panel and the integrated harness assembly according to any of the above technical solutions, and the outer door panel and the inner door panel constitute a door frame and form an inner door chamber; the integrated harness assembly is disposed inside the inner chamber, the electrical unit is disposed in the inner door chamber and the electrical unit is electrically connected to the conductive wire 20. A connection position between the conductive wire 20 and the electrical unit, i.e., an interface of the conductive wire 20, may be disposed close to the electrical unit to facilitate the electrical connection therebetween. Since the integrated harness assembly in the door according to the embodiment integrates the conductive wire 20, it is only necessary to directly connect the electrical unit to the conductive wire 20, which is quick, convenient and efficient.

It should be noted that `inner' refers to a side of the inner door panel close to the interior of the automobile, and 'outer' refers to a side of the inner door panel away from the interior of the automobile. It should be noted that an orientation or positional relationship indicated by the term 'inner', 'outer' or the like is based on that illustrated in the drawings, which is only for the convenience of describing the present disclosure and simplifying the description, rather than indicating or implying that a referred device or element must have a specific orientation, or must be constructed and operated in a specific orientation, so the term cannot be understood as a limitation to the present disclosure.

An embodiment of a fourth aspect of the present disclosure provides a vehicle, which includes the integrated harness assembly according to any one of the above technical solutions, thereby achieving all the advantageous technical effects of the integrated harness assembly, which will not be repeated here.

In this embodiment, the vehicle may be an electric mobile, a train, a ship or an airplane.

Finally, it should be noted that the above embodiments are only intended to illustrate, rather than limiting, the technical solutions of the present disclosure. Although the present disclosure has been described in detail with reference to the foregoing embodiments, it should be understood by those of ordinary skill in the art that the technical solution of the foregoing embodiments may still be modified, or some or all of the technical features therein may be replaced equivalently, and those modifications or replacements do not cause the essences of the corresponding technical solutions to deviate from the scope of the technical solutions of various embodiments of the present disclosure. The specification provided here sets forth numerous specific details. However, it should be understood that the embodiments of the present disclosure may be practiced without those specific details. In some instances, well-known methods, structures and techniques are not illustrated in detail so as not to obscure the understanding of the specification. Furthermore, those skilled in the art may understand that although some embodiments herein include some features included in other embodiments rather than other features, combinations of features of different embodiments are meant to be within the scope of the present disclosure and form different embodiments.

## Claims

1. An integrated harness assembly, comprising: a substrate and a conductive wire, wherein the conductive wire comprises an insulating layer and at least one conductive core, and the insulating layer wraps the conductive core and is connected to the substrate.

2. The integrated harness assembly according to claim 1, wherein the conductive wire comprises a plurality of conductive cores which are insulated from each other and an insulating layer which wraps the plurality of conductive cores.

3. The integrated harness assembly according to claim 1, wherein when there are a plurality of conductive wires belonging to a same loop, a loop connection spot is disposed in the insulating layer to connect the conductive wires in the same loop.

4. The integrated harness assembly according to claim 1, wherein the conductive wire is disposed at one side of the substrate;
or, a portion of the conductive wire located inside the substrate is an inner conductive wire, and a portion of the conductive wire located outside the substrate is an outer conductive wire; the substrate is provided with a via-hole, and one of the inner conductive wire and the outer conductive wire is connected to the other through the via-hole.

5. The integrated harness assembly according to claim 1, wherein the conductive wire comprises a main conductive wire and a plurality of branch conductive wires, and the number of the conductive cores of the main conductive wire is greater than that of the conductive cores of the branch conductive wires.

6. The integrated harness assembly according to claim 1, wherein the conductive wire further comprises a shielding layer which wraps the conductive core and is insulated therefrom, and the shielding layer is located in or wraps the insulating layer.

7. The integrated harness assembly according to claim 1, further comprising terminals, which each comprises a connecting end and a plugging end, wherein the connecting end is electrically connected to an end of the conductive core.

8. The integrated harness assembly according to claim 7, wherein the connecting end and/or the plugging end is provided with a plating layer.

9. The integrated harness assembly according to claim 8, wherein a thickness of the plating layer on the connecting end is the same as that of the plating layer on the plugging end.

10. The integrated harness assembly according to claim 8, wherein a material of the plating layer on the connecting end is different from that of the plating layer on the plugging end.

11. The integrated harness assembly according to claim 8, wherein the plating layer is made of one or more of gold, silver, nickel, tin, zinc, tin-lead alloy, silver-antimony alloy, palladium, palladium-nickel alloy, graphite silver, graphene silver and silver-gold-zirconium alloy.

12. The integrated harness assembly according to claim 8, wherein the plating layer comprises a bottom layer and a surface layer.

13. The integrated harness assembly according to claim 12, wherein the bottom layer is made of one or more of gold, silver, nickel, tin, tin-lead alloy and zinc; the material of the surface layer is one or more of gold, silver, nickel, tin, tin-lead alloy, silver-antimony alloy, palladium, palladium-nickel alloy, graphite silver, graphene silver and silver-gold-zirconium alloy.

14. The integrated harness assembly according to claim 12, wherein the bottom layer has a thickness of 0.01 µm to 15 µm.

15. The integrated harness assembly according to claim 12, wherein the bottom layer has a thickness of 0.1 µm to 9 µm.

16. The integrated harness assembly according to claim 12, wherein the surface layer has a thickness of 0.5µm to 55 µm.

17. The integrated harness assembly according to claim 12, wherein the surface layer has a thickness of 1µm to 35 µm.

18. The integrated harness assembly according to claim 7, wherein the connecting end is electrically connected to the conductive core by crimping, welding or integral formation.

19. The integrated harness assembly according to claim 7, wherein the plugging end comprises a male pin and a female slot, which belong to different integrated harness assemblies or electrical devices, respectively, and an electrical loop is formed by the plugging between the male pin and the corresponding female slot.

20. The integrated harness assembly according to claim 7, further comprising a sheath, which is disposed at an end of the conductive wire and plugged with a sheath of an electric device or of any other integrated harness assembly to protect the terminals.

21. The integrated harness assembly according to any one of claims 1 to 20, wherein the conductive core is disposed on the substrate, the insulating layer is formed and fixed on the substrate by a 3D printing process, or an injection molding process, or a spraying process, or an immersion molding process, or a slush molding process, or an electrophoresis process, or a printing process, and the insulating layer wraps the conductive core.

22. The integrated harness assembly according to claim 21, wherein the insulating layer has a breakdown strength of 0.3 KV/mm to 35 KV/mm.

23. The integrated harness assembly according to claim 1, further comprising a fixing member which is integrally formed with the insulating layer by injection molding, and the fixing member and a portion of the insulating layer corresponding to the fixing member are disposed on two sides of the substrate, respectively.

24. The integrated harness assembly according to claim 23, wherein the substrate is provided with a connecting hole; the fixing member comprises a fixing portion and a connecting portion; the connecting portion has one end connected to the fixing portion, and the other end connected to the insulating layer via the connecting hole; and a cross-sectional area of the fixing portion is greater than an area of the connecting hole.

25. The integrated harness assembly according to claim 24, wherein the fixing portion is frustum-shaped, and has a diameter gradually reduced in a direction away from the substrate.

26. The integrated harness assembly according to claim 1, further comprising a sealing member, which is disposed on the substrate or the insulating layer by integral injection molding.

27. The integrated harness assembly according to claim 1, wherein the conductive core is made of one or more of metal, conductive ceramic, carbon-containing conductor, solid electrolyte, mixed conductor and conductive polymer material.

28. The integrated harness assembly according to claim 27, wherein the conductive core is made of copper or copper alloy, or aluminum or aluminum alloy.

29. The integrated harness assembly according to claim 1, wherein the conductive core is disposed on the substrate by a 3D printing process, a laser powder sintering process, a metal deposition process, a metal injection molding process, a laser etching process, a conductive ink printing process or a printed circuit board process.

30. The integrated harness assembly according to claim 1, comprising a plurality of substrates which comprise different splicing surfaces connected to each other by welding, clamping, threaded connection, riveting, bonding, magnetic attraction connection or plugging.

31. An automobile, comprising a door, a body roof, a bumper and the integrated harness assembly according to any one of claims 1 to 19; at least one of the door, the body roof and the bumper is provided with the integrated harness assembly.

32. A vehicle, comprising the integrated harness assembly according to any one of claims 1 to 30.

33. A method for manufacturing the integrated harness assembly according to any one of claims 1 to 30, comprising:
forming a substrate;
disposing a conductive core on the substrate; and
putting the substrate with the conductive core into a mold and forming an insulating layer outside the conductive wire by injection molding.
